**Europäisches Patentamt**

**European Patent Office**

**Office européen des brevets**

(11) Veröffentlichungsnummer: **0 252 511 B1**

## EUROPÄISCHE PATENTSCHRIFT

(45) Veröffentlichungstag der Patentschrift: **29.05.91**

(51) Int. Cl.⁵: **G06F 7/50**

(21) Anmeldenummer: **87109946.1**

(22) Anmeldetag: **09.07.87**

(54) **Verfahren und Anordnung zur Verknüpfung von Operanden variabler Länge in Datenverarbeitungsanlagen.**

(30) Priorität: **11.07.86 DE 3623518**

(43) Veröffentlichungstag der Anmeldung:
**13.01.88 Patentblatt 88/02**

(45) Bekanntmachung des Hinweises auf die
Patenterteilung:
**29.05.91 Patentblatt 91/22**

(84) Benannte Vertragsstaaten:
**AT BE CH DE FR GB IT LI NL SE**

(56) Entgegenhaltungen:
**EP-A- 0 051 154**
**GB-A- 2 104 260**
**US-A- 3 987 291**

(73) Patentinhaber: **Siemens Aktiengesellschaft**
**Wittelsbacherplatz 2**
**W-8000 München 2(DE)**

(72) Erfinder: **Schachtner, Johann, Ing.grad.**
**Ursberger Strasse 11**
**W-8000 München(DE)**
Erfinder: **Huss, Rolf-Rüdiger, Dr.-Ing.**
**Lindacher Strasse 8**
**W-8000 München(DE)**

EP 0 252 511 B1

**Beschreibung**

Die Erfindung bezieht sich auf eine Schaltungsanordnung zur Verknüpfung von Operanden variabler Länge in Datenverarbeitungsanlagen entsprechend den Merkmalen des Oberbegriffs des Anspruchs 1.

Eine der hauptsächlichsten Aufgaben eines Zentralprozessors innerhalb einer Datenverarbeitungsanlage ist die arithmetische und logische Verknüpfung von Operanden und das Bereitstellen der Ergebnisse. Die Verarbeitungseinheit eines Zentralprozessors besteht im wesentlichen aus zwei Registern und einer arithmetisch/logischen Verknüpfungseinheit ALU, die über Datensammelwege miteinander verbunden sind. Der für die Verknüpfung zweier Operanden notwendige Verarbeitungszyklus umfaßt in der Regel das Lesen der Operanden aus den Registern, die Verknüpfung in der arithmetisch/logischen Verknüpfungseinheit und den anschließenden Transfer des Ergebnisses in ein Zielregister. Dieser Ablauf ist relativ problemlos, wenn die Operandenlänge mit der Breite der Register und der arithmetisch/logischen Verknüpfungseinheit übereinstimmt. Probleme ergeben sich jedoch bei Operanden, die unterschiedliche Längen aufweisen. In den Fällen, in denen die Operanden länger als die Verarbeitungsbreite der arithmetisch/logischen Verknüpfungseinheit sind, werden die Operanden in kleinere, der Verarbeitungsbreite der Verknüpfungseinheit angepaßte Einheiten unterteilt und nacheinander verarbeitet. Bei kürzeren Operanden als die Verarbeitungsbreite der Verknüpfungseinheit kann die Einspeisung bzw. der Abgriff eines bei der Verknüpfung zu berücksichtigenden Übertrages, weil Lage und Länge der Operanden und des Verknüpfungsergebnisses nicht eindeutig festliegen, nicht ohne weiteres an der niedrigstwertigen bzw. höchstwertigen Stelle der Verknüpfungseinheit, also an den Rändern der Verknüpfungseinheit, erfolgen, sondern muß innerhalb der Verarbeitungsbreite der Verknüpfungseinheit an allen Stellen möglich sein. Nach der Verarbeitung kürzerer Operanden ist ein Überschreiben des Zielregisters in voller Breite und damit die Erzeugung einer Ergebnisinformation in einem Arbeitsgang mit dem Ergebnisoperanden meist nicht möglich.

Die wahlfreie Einspeisung bzw. der Abgriff eines Übertrages an beliebiger Stelle der Verknüpfungseinheit ist z.B. durch einen strukturierten Aufbau der Verknüpfungseinheit mit kleineren, jeweils einen Übertragseingang und einen Übertragsausgang aufweisenden Verknüpfungskomponenten möglich. Die Verknüpfungskomponenten können dabei so ausgelegt sein, daß sie Verknüpfungsgrößen mit einer Bitstelle oder mit mehreren Bitstellen, also Bitstellengruppen, miteinander verknüpfen. Aus kleineren Verknüpfungskomponenten aufgebaute Verknüpfungseinheiten werden insbesondere im Zusammenwirken mit Übertragsvorhersageeinrichtungen verwendet, wobei jeweils der Übertragsausgang ersetzt ist durch Ausgänge für zwei Hilfssignale, die der Übertragsvorhersageeinrichtung zugeführt und der Bildung der Übertragssignale für die einzelnen Verknüpfungskomponenten zugrundegelegt werden. Dabei zeigt jeweils ein Hilfssignal an, daß ein an der betreffenden Verknüpfungskomponente eintreffender Eingangsübertrag an die jeweils nächsthöhere Verknüpfungskomponente weitergeleitet werden muß. Das jeweils andere Hilfssignal zeigt an, daß unabhängig von einem Eingangsübertrag in jedem Fall ein Übertrag an die nächsthöhere Verknüpfungskomponente weitergeleitet werden muß.

Der Gebrauch und die Arbeitsweise einer strukturiert aufgebauten Verknüpfungseinheit in Verbindung mit einer Übertragsvorhersageeinrichtung ist beispielsweise dem Buch "Computer Arithmetic", K.Hwang, John Wiley and Sons, Inc., in dem die Hilfssignale mit Carry Propagate und Carry Generate bezeichnet sind, und der Patentschrift US 3 987 291 zu entnehmen.

Aus der US-Patentschrift die eine Anordnung zur Verknüpfung zweier Operanden variabler länge beschreibt, ist es ferner bekannt, zwischen der Verknüpfungseinheit und der Übertragsvorhersageeinrichtung den einzelnen Verknüpfungskomponenten der Verknüpfungseinheit individuell zugeordnete Auswahlschalter anzuordnen, die abhängig von einer Steuerinformation, die innerhalb der Verarbeitungsbreite der Verknüpfungsanordnung einen gültigen Operandenbereich festlegt, entweder die von der jeweils vorgeschalteten Verknüpfungskomponente gelieferten Hilfssignale oder aber stattdessen Ersatzsignale als Eingangssignale für die Übertragsvorhersageeinrichtung weiterschalten. Bei den Ersatzsignalen handelt es sich einmal um parallel an die einzelnen Auswahlschalter hingeführte externe Eingangsübertragssignale von denen jeweils an einer Stelle der Verknüpfungsanordnung abhängig von der den gültigen Operandenbereich anzeigenden Steuerinformation anstelle des betreffenden Hilfssignals, das die in jedem Fall erforderliche Weiterleitung eines Übertrages an die jeweils nächsthöhere Verknüpfungskomponente unabhängig von einem Eingangsübertrag anzeigt, durchgeschaltet wird. Auf diese Weise kann ein externer Eingangsübertrag nicht nur am niedrigstwertigen Rand der Verknüpfungseinheit, sondern an jeder Verknüpfungskomponentenposition eingespeist werden kann. Dies ist notwendig, wenn die zu verknüpfenden Operanden an einer eingerückten Stelle der Verknüpfungseinheit beginnen. Der externe Eingangsübertrag muß in diesem Fall an der betreffenden eingerückten Position zur Verfügung stehen. Im anderen Fall handelt es sich bei den Ersatzsignalen um ein von dem jeweiligen Auswahlschalter intern erzeugtes Signal, das anstelle des Hilfssignals, das die Weiterleitung eines Übertrages an die nächsthöhere Verknüpfungskomponente bei

2

Eintreffen eines Eingangsübertrages an der betreffenden Stelle anzeigt, an die Übertragsvorhersageeinrichtung weitergeschaltet wird. Diesem Ersatzsignal wird stets der feste logische Wert 0 zugeordnet. Insgesamt werden nur jeweils von dem am nächstniedrigerer Stelle eines gültigen Operandenbereichs innerhalb der Verarbeitungsbreite der Verknüpfungseinheit liegenden Auswahlschalter Ersatzsignale an die Übertragsvorhersageeinrichtung weitergeschaltet, so daß der gültige Operandenbereich vollständig unabhängig von allen übrigen Bereichen der Verknüpfungseinheit als eigenständiger Addierer arbeiten kann. Die anderen Bereiche können so gleichzeitig als weitere unabhängige Addierer verwendet werden.

Aufgrund des vorbeschriebenen Einspeisungsprinzips externer Eingangsüberträge ist die zugehörige Schaltungsanordnung aufwendig, weil eine aufwendige Decodierschaltung notwendig ist, die die Durchschaltung der Ersatzsignale an einer betreffenden Stelle veranlaßt. Gleiches gilt im übrigen für den Abgriff eines an eingerückter Stelle erzeugten Ausgangsübertrages, der als externer Ausgangsübertrag der Verknüpfungseinheit zur Verfügung gestellt werden muß.

Eine andere Lösung des gleichen Problems besteht darin, die Verknüpfungseinheit durch Maskeneinrichtungen, denen jeweils ein Operand der zu verknüpfenden Operanden vor der Verknüpfungseinheit zugeführt wird, funktionell zu verkürzen, indem die eine Maskeneinrichtung operationsabhängig steuerbar ist und nicht zum Operanden gehörende Verknüpfungsgrößen bei einer Addition in den Höchstwert, bei vierstelligen Verknüpfungsgrößen z.B. "1111" bei einer Binäraddition bzw. "1001" bei einer Dezimaladdition, und bei allen anderen Verknüpfungsoperationen in den Niedrigstwert, und die andere Maskiereinrichtung nicht zum Operanden gehörende Verknüpfungsgrößen in den Niedrigstwert umwandelt. Dadurch wird ein am Rand der Verknüpfungseinheit anliegender Übertrag bis zum Anfang des gültigen Operandenfeldes und ein Ausgangsübertrag vom Ende des Operandenfeldes bis zum Übertragsausgang der Verknüpfungseinheit weitergeleitet. Eine Verknüpfungsanordnung mit einem solchen Lösungsprinzip ist in der DE-PS 30 40 931 beschrieben. Beide Lösungsarten benötigen jedoch einen großen Hardwareaufwand und eine umfangreiche Taktsteuerung der Hardware, die die Verarbeitungsgeschwindigkeit der Verknüpfungseinheit verlangsamen.

Das Problem der Erzeugung einer Ergebnisinformation in einem Zielregister, die aus dem Ergebnisoperanden an Stelle des Verknüpfungsoperanden und aus den nicht zum Verknüpfungsoperanden gehörenden Informationsteilen einer Eingangsinformation zusammengesetzt ist, wird bisher dadurch gelöst, daß entweder mit einer komplizierten Taktsteuerung der Ergebnisoperand partiell in eines der Register als Zielregister rückgeschrieben wird oder daß in einem dem Zielregister vorgeschalteten aufwendigen Ergebnisaufbereitungsregister der Ergebnisoperand zunächst zu einer Ergebnisinformation mit Breite des Zielregisters aufbereitet und dann die gesamte Ergebnisinformation rückgeschrieben wird. Dazu wird die Eingangsinformation, deren Verknüpfungsoperand durch den Ergebnisoperanden ersetzt werden soll, vor Beginn der Verknüpfung in das Ergebnisaufbereitungsregister geschrieben und nach erfolgter Verknüpfung der Verknüpfungsoperand durch den Ergebnisoperanden ersetzt. Beide Arten der Erzeugung einer Ergebnisinformation in einem Zielregister erfordern wiederum einen erheblichen Aufwand an Hardware und an Taktsteuerungen für die Hardware.

Aufgabe der Erfindung ist es, eine Schaltungsanordnung zur Verknüpfung zweier Operanden mit abweichender Länge von der konstanten Verarbeitungsbreite einer Verknüpfungseinheit anzugeben, die wenig Hardwareaufwand und wenig Steuerungsaufwand für die Hardware erfordert und die die Verarbeitungsgeschwindigkeit der Verknüpfungseinheit nicht verlangsamt.

Diese Aufgabe wird bei einer Schaltungsanordnung der eingangs genannten Art durch die Merkmale des kennzeichnenden Teils des Anspruchs 1 gelöst.

Im Gegensatz zu den bekannten Lösungen werden danach weder die außerhalb des eingeschränkten gültigen Operandenbereiches liegenden Operandenstellen abgeändert, damit ein externer Eingangsübertrag der Verknüpfungseinheit zur rechten Grenze des gültigen Operandenbereiches und ein an der linken Grenze des gültigen Operandenbereiches auftretender Ausgangsübertrag zum Übertragsausgang der Verknüpfungseinheit weitergeleitet wird, als wäre die Verknüpfungseinheit über die gesamte Arbeitsbreite wirksam, noch wird ein Eingangsübertrag für die Verknüpfungseinheit über gesonderte Auswahlschaltglieder jeweils dem Verknüpfungselement für die jeweils erste Operandenstelle am rechten Rand des wirksamen Operandenbereichs zugeführt und der Ausgangsübertrag des wirksamen Operandenbereichs durch gesonderte Auswahlschaltglieder abgegriffen. Vielmehr werden gemäß der neuen Lösung die für die Übertragsvorhersageeinrichtung von den einzelnen Verknüpfungskomponenten der Verknüpfungseinheit gelieferten Hilfssignale zur Ermittlung der Eingangsüberträge für die jeweils nächste Verknüpfungskomponente der nächsten Operandenstelle unmittelbar abgewandelt, indem für alle außerhalb des jeweils gültigen Operandenbereichs liegenden Operandenstellen in einheitlicher Weise Bedingungen geschaffen werden, wonach ein möglicher Eingangsübertrag für eine Operandenstelle zwangsläufig jeweils als Ausgangsübertrag weitergeleitet wird. Zu diesem Zweck werden die Hilfssignale der einzelnen Verknüpfungskomponenten gleichfalls über Auswahlschaltglieder an die Übertragsvorhersageeinrichtung zugeführt. Es handelt sich hierbei aber um einheitlich aufgebaute einfache Auswahlschalter mit nur zwei Informationseingängen, die entweder die von den Verknüpfungskomponenten gelieferten Hilfssignale oder aber stattdessen Ersatzsignale in Form einer für alle Auswahlschalter einheitlichen festen Potentialkombination durchschalten. Der Schaltungsaufwand hierfür ist im Vergleich zu den bekannten Lösungen geringer, und außerdem vereinfacht sich der Steuerungsablauf, zumal die Einstellung der einzelnen Auswahlschalter durch den Operandenstellen individuell zugeordnete einfache Umschaltsignale erfolgen kann, die in einfacher Weise von der den gültigen Operandenbereich festlegenden Steuerinformation ableitbar sind.

Die zur Kennzeichnung von nicht zum gültigen Operandenbereich gehörenden Stellen verwendete Auswahlinformation wird in einer vorteilhaften Weiterbildung der Erfindung auch zur Auswahl der zur Ergebnisinformation benötigten Informationsteile aus einer der Eingangsinformationen und der Verknüpfungsinformation und zum Zusammenschalten dieser Informationsteile zur Ergebnisinformation mittels eines das Ergebnis unmittelbar bereitstellenden einfachen Auswahlschalters verwendet. Die dadurch nach der Verknüpfung automatisch entstehende vollständige Ergebnisinformation in Breite des Zielregisters benötigt nur einen einzigen Rückschreibtakt, um in das Zielregister zu gelangen. Auf diese Weise ist eine aufwendige Taktsteuerung für partielles Rückschreiben und ein gesondertes Ergebnisaufbereitungsregister zum Aufbereiten des Verknüpfungsergebnisses zu einer Ergebnisinformation nicht notwendig.

Weitere Einzelheiten der Erfindung ergeben sich aus den übrigen Unteransprüchen. Ein Ausführungsbeispiel sei nachfolgend anhand der Zeichnung näher erläutert.

Im einzelnen zeigt:

FIG 1     das Blockschaltbild einer Anordnung zum Verknüpfen von Operanden variabler Länge gemäß der Erfindung und

FIG 2     ein Verknüpfungsbeispiel zur Erläuterung der Arbeitsweise der Anordnung nach FIG 1.

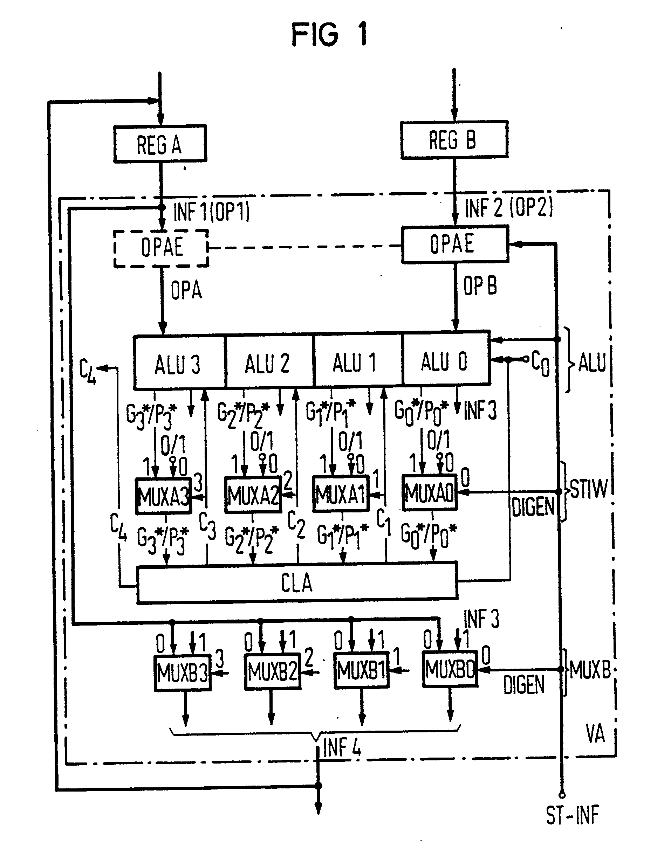

FIG 1 zeigt eine Verknüpfungsanordnung VA zur Verknüpfung zweier digitorientierter Operanden mit innerhalb der Verarbeitungsbreite der Verknüpfungsanordnung variabler Lage und Länge. Bei dem Ausführungsbeispiel beträgt die Verarbeitungsbreite 16 Bit, aufgeteilt in vier Digitgruppen zu je vier Bit. Damit kann die Verknüpfungsanordnung VA Operanden mit den Längen von einem Digit bis zu vier Digits verarbeiten, die an beliebigen Digitgrenzen beginnen und enden können. Jedes Digit der zu verknüpfenden Operanden stellt dabei eine Verknüpfungsgröße dar.

Im Mittelpunkt der Verknüpfungsanordnung VA steht eine an sich bekannte arithmetisch/logische Verknüpfungseinheit ALU in Verbindung mit einer ebenfalls an sich bekannten Übertragsvorhersageeinrichtung CLA. Die arithmetisch/logische Verknüpfungseinheit ALU ist aus mehreren Verknüpfungskomponenten aufgebaut, die jeweils zwei korrespondierende Verknüpfungsgrößen der zu verknüpfenden Operandeninformationen OP1 und OP2 miteinander verknüpfen. Eine Verknüpfungsgröße kann dabei eine Bitstelle oder mehrere Bitstellen umfassen. Jede Verknüpfungskomponente weist zwei gesonderte Steuersignalausgänge $G_i^*$ und $P_i^*$, die für die Hilfssignale Carry Generate und Carry Propagate stehen, sowie einen Übertragungseingang $C_i$ für die Steuerinformation Carry auf. Die Hilfssignale $G_i^*$ werden von den Verknüpfungskomponenten gesetzt, wenn aufgrund Verknüpfungsgrößen ein von der Verknüpfungskomponente nicht mehr verarbeitbares Ergebnisentsteht, während die Hilfssignale $P_i^*$ gesetzt werden, wenn das Ergebnis dem von der Verknüpfungskomponente gerade noch verarbeitbaren Maximalwert, ohne einen Übertrag am Übertragseingang $C_i$ zu berücksichtigen, entspricht. Ein in diesem Fall noch hinzukommender Übertrag übersteigt die Verarbeitungskapazität der Verknüpfungskomponente. Es gilt:

$$P_i = A_i \vee B_i \quad \text{und} \quad G_i = A_i \wedge B_i$$

für einstellige Verknüpfungskomponenten i, und

$$P_i^* = \bigwedge_{j=0}^{j=i-1} P_j \quad \text{und} \quad G_i^* = \bigvee_{m=0}^{m=i-1} \bigwedge_{n=1}^{n=i-1} G_m \wedge P_n \quad \text{mit } n > m$$

für mehrstellige Verknüpfungskomponenten i.

Dabei bedeuten:

i          Index der Verknüpfungskomponente

j, m, n    Laufvariablen

$\vee, \wedge$    logisches ODER, UND

$\vee, \wedge$     iteratives ODER, UND

P        Hilfssignal Carry Propagate

G        Hilfssignal Carry Generate

Die Hilfssignale $G_i^*$ und $P_i^*$ werden der Übertragsvorhersageeinrichtung über den Steuerinformationswandler STIW zugeführt, der in FIG 1 durch den Auswahlschalter MUXA verkörpert wird. Der Auswahlschalter MUXA wird dabei von der Auswahlinformation DIGEN gesteuert. Ist durch die Auswahlinformation DIGEN kein eingeschränkter gültiger Operandenbereich gekennzeichnet, sind mithin sämtliche DIGEN-Signale "1", werden die von den Verknüpfungskomponenten der Verknüpfungseinheit ALU gelieferten Hilfssignale $G_i^*$ und $P_i^*$ durch den Steuerinformationswandler STIW hindurchgeschleust und direkt der Übertragsvorhersageeinrichtung CLA zugeführt. Sind durch die Auswahlinformation DIGEN Stellen als nicht zum gültigen Operandenbereich gehörig, also mit "0" gekennzeichnet, werden an diesen Stellen die Hilfssignale $G_i^*$ und $P_i^*$ für die Übertragsvorhersageeinrichtung CLA gesperrt und stattdessen die festen logischen Werte "0" für die Hilfssignale $G_i^*$ und "1" für die Hilfssignale $P_i^*$ an die Übertragsvorhersageeinrichtung CLA weitergegeben. Die Übertragsvorhersageeinrichtung CLA generiert dann mit den von den einzelnen Verknüpfungskomponenten erhaltenen Hilfssignalen $G_i^*$ und $P_i^*$ und dem am Übertragseingang $C_0$ der Verknüpfungseinheit ALU anliegenden Übertrag für jede Verknüpfungskomponente ein eigenes Übertragssignal $C_i$. Es gilt:

$$C_1 = G_0 \vee (P_0 \wedge C_0)$$
$$C_2 = G_1 \vee (P_1 \wedge G_0) \vee (P_1 \wedge P_0 \wedge C_0)$$
$$C_3 = G_2 \vee (P_2 \wedge G_1) \vee (P_2 \wedge P_1 \wedge G_0) \vee (P_2 \wedge P_1 \wedge P_0 \wedge C_0)$$
$$C_4 = G_3 \vee (P_3 \wedge G_2) \vee (P_3 \wedge P_2 \wedge G_1) \vee (P_3 \wedge P_2 \wedge P_1 \wedge G_0) \vee (P_3 \wedge P_2 \wedge P_1 \wedge P_0 \wedge C_0).$$

Allgemein gilt:

$$C_{i+1} = G_i \vee (P_i \wedge C_i)$$

für einstellige Verknüpfungskomponenten i, und

$$C_{i+1}^* = G_i^* \vee (P_i^* \wedge C_i^*)$$

für mehrstellige Verknüpfungskomponenten i.

Extern wird der Verknüpfungseinheit ALU ein Übertrag über den Übertragseingang $C_0$ zugeführt und über den Übertragsausgang $C_4$ ausgegeben. Die Einzelergebnisse der Verknüpfungskomponenten werden in der Signalgruppe INF3 zusammengefaßt und weitergeleitet.

Weitere Bestandteile der Verknüpfungsanordnung VA sind ein der Verknüpfungseinheit ALU nachgeschalteter Auswahlschalter MUXB und eine der Verknüpfungseinheit ALU unmittelbar vorgeschaltete und in an sich bekannter Weise aufgebaute Operandenaufbereitungseinrichtung OPAE. Die Operandenaufbereitungseinrichtung OPAE ist bei diesem Ausführungsbeispiel in den Eingangszweig 2 zwischengeschaltet, sie könnte aber noch in den Eingangszweig 1 zwischengeschaltet sein. Eine weitere Alternative liegt in einer Anordnung der Operandenaufbereitungseinrichtung OPAE außerhalb der Verknüpfungsanordnung VA.

Die Operandenaufbereitungseinrichtung OPAE führt eine Längenanpassung der als Teil der Eingangsinformation INF1 und INF2 auftretenden zu verknüpfenden Operanden OP1 und OP2 aus, in dem sie den kürzeren der beiden Operanden auf die Breite des längeren Operanden mit Null auffüllt. In der Operandenaufbereitungseinrichtung OPAE wird weiter, falls erforderlich, eine gegenseitige Ausrichtung der Lagen der Operanden OP1 und OP2 innerhalb der Eingangsinformationen INF1 und INF2 ausgeführt. Die Ausrichtung der Lagen kann z. B. durch eine Operandenschiebeeinrichtung und die Längenanpassung z. B. durch eine Maskeneinrichtung erfolgen.

Zur Steuerung der Operandenaufbereitungseinrichtung OPAE wird eine außerhalb der Verknüpfungsanordnung VA erzeugte Steuerinformation ST-INF verwendet. Die nicht im Bild dargestellte Erzeugung der Steuerinformation ST-INF erfolgt aufgrund der gerade abzuarbeitenden Mikrobefehle, in denen Lage und Länge der zu verarbeitenden Operanden OP1 und OP2 beschrieben sind. Aus der Steuerinformation ST-INF wird die Auswahlinformation DIGEN abgezweigt, die innerhalb der Verknüpfungsanordnung VA den Steuerinformationswandler STIW und den Auswahlschalter MUXB steuern. Die Auswahlinformation DIGEN kennzeichnet innerhalb der Verarbeitungsbreite jede zur Ergebnisbildung beitragende Verknüpfungsgröße mit einem Steuersignal DIGEN = "1", die zusammen die zu verknüpfenden Operanden OP1 und OP2 bilden. Verknüpfungsgrößen die nicht zur Ergebnisbildung beitragen, werden mit einem Steuersignal DIGEN = "0" gekennzeichnet.

Der der arithmetisch/logischen Verknüpfungseinheit ALU nachgeschaltete Auswahlschalter MUXB filtert unter Verwendung der Auswahlinformation DIGEN aus der Eingangsinformation INF1 die nicht zur Ergebnisbildung beitragenden, also die nicht zum Operanden OP1 gehörenden Informationsteile und aus dem Verknüpfungsergebnis INF3 den Ergebnisoperanden ERGOP heraus und bildet daraus die Ergebnisinformation INF4 in Breite des Zielregisters REGA. Die Komponenten des Auswahlschalters MUXB, die die Auswahlinformation DIGEN = "1" erhalten, sperren die von der Eingangsinformation INF1 ankommenden Verknüpfungsgrößen und schalten stattdessen die entsprechenden Verknüpfungsgrößen der Ergebnisinformation INF3, insgesamt also den Ergebnisinformation ERGOP, durch und blenden auf diese Weise den Ergebnisoperanden ERGOP in die Eingangsinformationen INF1 ein.

Den Eingängen der Verknüpfungsanordnung VA unmittelbar vorgeschaltet sind die Eingangsregister REGA und REGB, in denen die als Teil der Eingangsinformationen INF1 und INF2 auftretenden zu verknüpfenden Operanden OP1 und OP2 bereitgestellt werden. Die Einzelregister REGA und REGB können durch Mehrfachregister ersetzt werden, von denen durch einen Auswahlmechanismus nach Bedarf jeweils ein Register ausgewählt wird. In dem Ausführungsbeispiel dient das Eingangsregister REGA gleichzeitig als Zielregister für die von der Verknüpfungsanordnung VA ermittelte Ergebnisinformation INF4. Es könnten aber auch das Eingangsregister REGB oder ein anderes Register mit entsprechender Verarbeitungsbreite als Zielregister benutzt werden.

Zusammengefaßt ergibt sich damit für die Anordnung nach FIG 1 folgender Arbeitsablauf:

Aus den Mikrobefehlen wird zur Steuerung der Verknüpfungsanordnung VA eine Steuerinformaiton ST-INF gebildet, aus der weiter eine Auswahlinformation DIGEN abgeleitet wird, die die zur Ergebnisbildung beitragenden Informationsteile und damit die miteinander zu verknüpfenden Operanden OP1 und OP2 innerhalb zweier Eingangsinformationen INF1 und INF2 kennzeichnet. Im Falle zueinander in Lage und Länge nicht ausgerichteter Operanden OP1 und OP2 wird mittels einer von der Steuerinformation ST-INF gesteuerten Operandenaufbereitungseinrichtung OPAE eine Lagen-und Längenanpassung der Operanden OP1 und OP2 zueinander ausgeführt. Mit der aus der Steuerinformation ST-INF abgezweigten Auswahlinformation DIGEN werden dann über die Verarbeitungsbreite an nicht zum gültigen Operandenbereich gehörenden Stelle die von den Verknüpfungskomponenten nach einem bestimmten Muster erzeugten Hilfssignale $G_i^*$ und $P_i^*$ von einem Steuerinformationswandler STIW durch feste Werte ersetzt, die in der Verknüpfungseinheit ALU für die Verknüpfung eine funktionelle Längeneinstellung bewirken. Mit dem der Verknüpfungseinheit ALU nachgeschalteten Auswahlschalter MUXB wird schließlich mit Hilfe der Auswahlinformation DIGEN die Ergebnisinformation INF4 durch Auswählen der entsprechenden Informationsteile aus einer der Eingangsinformationen INF1 oder INF2 und dem Verknüpfungsergebnis INF3 zusammengestellt.

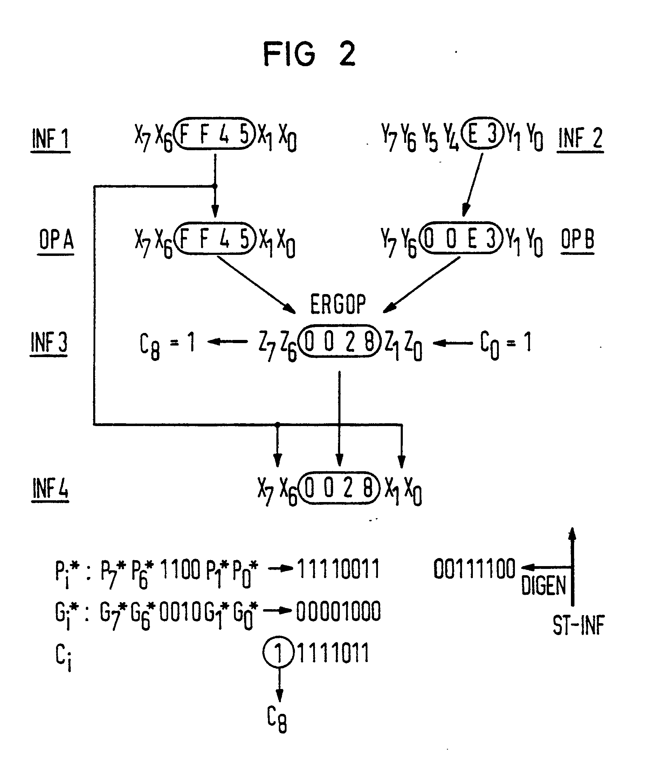

FIG 2 zeigt ein Verknüpfungsbeispiel für eine hexadezimale Addition. Ausgehend von den beiden Information INF1 und INF2 der beiden Operandenregister REGA und REGB mit den Operanden OP1 und OP2 werden die Operanden OP1 und OP2 durch die Steuerinformation DIGEN gekennzeichnet. Über die Operandenaufbereitungseinrichtung OPAE werden die gekennzeichnet Operanden OP1 und OP2 zueinander lagenausgerichtet und längenangepaßt. Anschließend werden die Eingangsinformationen OPA und OPB der Verknüpfungseinheit ALU zugeführt. Die einzelnen Verknüpfungskomponenten der Verknüpfungseinheit ALU generieren Hilfssignale $G_i^*$ und $P_i^*$, die an nicht zum gültigen Operandenbereich gehörenden Stellen, gekennzeichnet durch die Auswahlinformation DIGEN = "0", in $G_i^*$ = "0" und $P_i^*$ = "1" umgewandelt werden. Der Übertragsvorhersageeinrichtung CLA sind damit maximalwertermittelnde Verknüpfungskomponenten vorgetäuscht, wodurch sie den am Übertragseingang $C_0$ der Verknüpfungseinheit ALU anliegenden Übertrag an die erste Stelle des gültigen Operandenbereichs und den an der letzten Stelle des gültigen Operandenbereichs auftretenden Übertrag an den Übertragsausgang $C_8$ der Verknüpfungseinheit ALU weiterleitet. Das Verknüpfungsergebnis INF3 wird zu dem nachgeschalteten und mit der Eingangsinformation INF1 bereits versorgten Auswahlschalter MUXB weitergeleitet, der den Ergebnisoperanden ERGOP in die Eingangsinformation INF1 einblendet und die Ergebnisinformation INF4 bildet.

**Ansprüche**

1.  Schaltungsanordnung in Datenverarbeitungsanlagen zur Verknüpfung von in Eingangsregistern (REGA, REGB) (INF1, INF2) enthaltenen Operanden (OP1, OP2) variabler Länge bestehend aus:

    a) Einer arithmetisch/logischen Verknüpfungseinheit (ALU) vorgegebener Verarbeitungsbreite, die für jeweils eine zu verknüpfende Bitstelle (z.B. $A_0/B_0$) bzw. Bitstellengruppe in einzelne Verknüpfungskomponenten (z.B. ALU0 bis ALU3) unterteilt ist, die abhängig von den jeweils zu verknüpfenden Operandenbitstellen und einem möglichen Eingangsübertrag neben dem jeweiligen Ergebnis und einem aktuellen Ausgangsübertrag jeweils zwei Hilfssignale ($P_i$ bzw. $P_i^*$ und $G_i$ bzw. $G_i^*$) je Bitstelle bzw. Bitstellengruppe gemäß der Beziehungen

$$P_i = A_i \quad v \quad B_i \quad \text{und} \quad G_i = A_i \wedge B_i \quad \text{bzw.}$$

$$P_i^* = \bigwedge_{j=0}^{j=i-1} P_j \quad \text{und} \quad G_i^* = \bigvee_{m=0}^{m=i-1} \bigwedge_{n=1}^{n=i-1} G_m \wedge P_n \quad \text{mit} \quad n > m$$

liefern, von denen das eine ($G_i$ bzw. $G_i^*$) die Ermittlung eines Ausgangsübertrags unabhängig vom Eingangsübertrag und das andere ($P_i$ bzw. $P_i^*$) die Weiterleitung eines Eingangsübertrages als Ausgangsübertrag anzeigt,

b) einer der arithmetisch/logischen Verknüpfungseinheit (ALU) zur gegenseitigen Lagen- und Längenanpassung der Operanden (OP1, OP2) vorgeschalteten Operandenaufbereitungseinrichtung (OPAE),

c) einer Übertragsvorhersageeinrichtung (CLA), die die Eingangsüberträge ($C_{i+1}$ bzw. $C_{i+1}^*$) für die jeweils nächsthöhere Bitstelle oder Bitstellengruppe entsprechend

$$C_{i+1} = G_i \vee (P_i \wedge C_i) \quad \text{bzw.} \quad C_{i+1}^* = G_i^* \vee (P_i^* \wedge C_i^*)$$

für die einzelnen Verknüpfungskomponenten (ALU0 bis ALU3) ermittelt, und

d) einer der Anzahl der Verknüpfungskomponenten (ALU0 bis ALU3) entsprechenden Anzahl von Auswahlschaltern (MUXA0 bis MUXA3), die abhängig von einer den gültigen Operandenbereich anzeigenden Auswahlinformation (DIGEN) wenigstens innerhalb des gültigen Operandenbereichs die von den Verknüpfungskomponenten (ALU0 bis ALU3) jeweils gelieferten Hilfssignale ($G_i$ und $P_i$ bzw. $G_i^*$ und $P_i^*$) an die Übertragsvorhersageeinrichtung (CLA) durchschalten,

**dadurch gekennzeichnet,** daß allen Auswahlschaltern (MUXA0 bis MUXA3) neben den von den zugehörigen Verknüpfungskomponenten (ALU0 bis ALU3) gelieferten Hilfssignalen ($P_i$ und $G_i$ bzw. $P_i^*$ und $G_i^*$) als eine erste Eingangssignalgruppe eine zweite Eingangssignalgruppe zugeführt wird, die aus einer einheitlich vorgegebenen Kombination von fest vorgegebenen Ersatzsignalen in der Weise besteht, daß das dem P-Hilfssignal entsprechende Ersatzsignal den logischen Wert 1 und das dem G-Hilfssignal entsprechende Ersatzsignal den logischen Wert 0 aufweist, und daß bei denjenigen Auswahlschaltern, die innerhalb der Verarbeitungsbreite der arithmetisch/logischen Verknüpfungseinheit (ALU) nicht dem von den lagen- und längenangepaßten Operanden (OP1, OP2) vorgegebenen gültigen Operandenbereich zugeordnet sind, an Stelle der von den Verknüpfungskomponenten (ALU0 bis ALU3) gelieferten Hilfssignale ($P_i$ und $G_i$ bzw. $P_i^*$ und $G_i^*$) jeweils die der einheitlichen Kombination entsprechenden Ersatzsignale durchgeschaltet werden, so daß ein am niedrigstwertigen Rand der Übertragsvorhersageeinrichtung (CLA) anliegender Eingangsübertrag (C0) durch die Übertragsvorhersageeinrichtung (CLA) hindurch unmittelbar am niedrigstwertigen Rand des gültigen Operandenbereichs wirkt und ein am höchstwertigen Rand des gültigen Operandenbereichs ermittelter Ausgangsübertrag (z.B. C2) durch die Übertragsvorhersageeinrichtung (CLA) hindurch unmittelbar am höchstwertigen Rand der Übertragsvorhersageeinrichtung (CLA) ansteht und als externer Ausgangsübertrag (C4) der Verknüpfungseinheit (ALU) ausgegeben wird.

2. Schaltungsanordnung nach Anspruch 1,
**dadurch gekennzeichnet,** daß an den Ergebnisausgängen der arithmetisch/logischen Verknüpfungskomponenten (ALU0 bis ALU3) jeweils ein Auswahlschalter (MUXB0 bis MUXB3) mit zwei Informationseingängen vorgesehen ist, von denen der eine Informationseingang mit dem Ergebnisausgang der korrespondierenden Verknüpfungskomponente (ALU...) und der andere Informationseingang mit einem korrespondierenden Ausgang eines einen der Operanden (z.B. OP1) liefernden Eingangsregisters (z.B. REGA) verbunden ist, und daß jeweils einer der Informationseingänge der Auswahlschalter (MUXB0 bis MUXB3) abhängig von der Auswahlinformation (DIGEN) auf den jeweiligen Ausgang durchgeschaltet wird.

**Claims**

1. Circuit arrangement in data processing systems for combining variable-length operands (OP1, OP2) contained in input registers (REGA, REGB), consisting of:

   a) an arithmetic/logic combinative unit (ALU) of prescribed processing width, which is subdivided for in each case one bit position (e.g. $A_0/B_0$) or bit position group to be combined into individual combinative components (e.g. ALU0 to ALU3) which in addition to the respective result and an actual output carry deliver in each case, depending upon the respective operand bit positions to be combined and a possible input carry, two auxiliary signals ($F_i$ or $P_i^*$ and $G_i$ or $G_i^*$) per bit position or bit position group in accordance with the relationships

$$P_i = A_i \lor B_i \quad \text{and} \quad G_i = A_i \land B_i \quad \text{or}$$

$$P_i^* = \bigwedge_{j=0}^{j=i-1} P_j \quad \text{and} \quad G_i^* = \bigvee_{m=0}^{m=i-1} \bigwedge_{n=1}^{n=i-1} G_n \land P_n \quad \text{where } n > m$$

   of which one ($G_i$ or $G_i^*$) displays the determination of an output carry independently of the input carry and the other ($P_i$ or $P_i^*$) displays the relay of an input carry as output carry,

   b) an operand conditioning device (OPAE) connected upstream of the arithmetic/logic combinative unit (ALU) for the mutual position and length adjustment of the operands (OP1, OP2),

   c) a carry prediction device (CLA), which determines the input carries ($C_{i+1}$ or $C_{i+1}^*$) for the respective next higher bit position or bit position group in accordance with

$$C_{i+1} = G_i \lor (P_i \land C_i) \quad \text{where} \quad C_i^* + 1 = G_i^* \lor (P_i^* \land C_i^*)$$

   for the individual combinative components (ALU0 to ALU3), and

   d) a number of selector switches (MUXA0 to MUXA3), which corresponds to the number of the combinative components (ALU0 to ALU3), which switches, depending upon an item of selection information (DIGEN) which displays the valid operand area, at least within the valid operand area switch the auxiliary signals ($G_i$ and $P_i$ or $G_i^*$ or $P_i^*$) respectively supplied in each case by the combinative components (ALU0 to ALU3) to the carry prediction device (CLA), characterised in that apart from the auxiliary signals ($P_i$ and $G_i$ or $P_i^*$ and $G_i^*$) supplied as a first input signal group by the associated combinative components (ALU0 to ALU3), all the selector switches (MUXA0 to MUXA3) are fed a second input signal group, which consists of a uniformly prescribed combination of permanently prescribed alternate signals, in such a way that the alternate signal corresponding to the P auxiliary signal has the logic value 1 and the alternate signal corresponding to the G auxiliary signal has the logic value 0, and in that in the case of those selector switches which within the processing width of the arithmetic/logic combinative unit (ALU) are not assigned to the valid operand area prescribed by the operands (OP1, OP2), adjusted in position and length, instead of the auxiliary signals ($P_i$ and $G_i$ or $P_i^*$ and $G_i^*$) supplied by the combinative components (ALU0 to ALU3) the alternate signals corresponding to the uniform combination are switched through in each case, so that an input carry (C0) present at the least significant margin of the carry prediction device (CLA) acts directly at the least significant margin of the valid operand area through the carry prediction device (CLA), and an output carry (e.g. C2) determined at the most significant margin of the valid operand area is present, through the carry prediction device (CLA), directly at the most significant margin of the carry prediction device (CLA) and is output as external output carry (C4) of the combinative unit (ALU).

2. Circuit arrangement according to Claim 1, characterised in that there is provided in each case at the result outputs of the arithmetic/logic combinative components (ALU0 to ALU3) a selector switch (MUXB0 to MUXB3) having two information inputs, of which one information input is connected to the result output of the corresponding combinative component (ALU...) and the other information input is connected to a corresponding output of an input register (e.g. REGA) which supplies one of the operands (e.g. OP1), and in that in each case one of the information inputs of the selector switches (MUXB0 to MUXB3) is switched through onto the respective output depending upon the item of selection information (DIGEN).


**Revendications**

1. Montage dans des installations de traitement de données pour combiner des opérandes (OP1,OP2) de longueur variable, contenus dans des registres d'entrée (REGA,REGB), constitué par

a) une unité combinatoire arithmétique/logique (ALU) qui possède une largeur de traitement prédéterminée, qui est subdivisée, pour respectivement une position binaire (par exemple $A_0/B_0$) ou un groupe de positions binaires, devant être combinées, en des composants combinatoires individuels (ALU0 à ALU3), qui fournissent, en fonction des positions binaires des opérandes devant être respectivement combinés et d'un report éventuel d'entrée, en dehors du résultat respectif et d'un report actuel de sortie, respectivement deux signaux auxiliaires ($P_i$ ou $P^*_i$, $G_i$ ou $G^*_i$) pour chaque position binaire ou chaque groupe de positions binaires conformément aux relations

$$P_i = A_i \vee B_i \quad \text{et} \quad G_i = A_i \ominus B_i \text{ ou}$$

$$P^*_i = \ominus_{j=0}^{j=i-1} P_j \quad \text{et} \quad G^*_i = \Omega_{m=0}^{m=i-1} \ominus \text{ ou } G_m \ominus_{n=1}^{n=i-1} P_n \text{ avec } n > m$$

dont l'un ($G_i$ ou $G^*_i$) indique la détermination d'un report de sortie indépendamment du report d'entrée et l'autre ($P_i$ ou $P^*_i$) indique la retransmission d'un report d'entrée en tant que report de sortie,

b) un dispositif (OPAE) de préparation des opérandes, branché en amont de l'unité combinatoire arithmétique/logique (ALU) pour l'adaptation réciproque des positions et des longueurs des opérandes (OP1,OP2),

c) un dispositif de prédiction de reports (CLA), qui détermine les reports d'entrée ($C_{i+1}$ ou $C^*_{i+1}$) pour la position binaire ou le groupe de positions binaires respectif immédiatement suivant, conformément à

$$C_{i+1} = G_i \vee (P_i \ominus C_i) \text{ et } C^*_{i+1} = G^*_i \vee (P^*_i \ominus C^*_i)$$

pour les différents composants combinatoires (ALU0 à ALU3), et

d) un nombre, qui correspond au nombre des composants combinatoires (ALU0 à ALU3), de commutateurs de sélection (MUXA0 à MUXA3), qui, en fonction d'une information de sélection (DIGEN) indiquant la zone valable des opérandes, transmettent, au moins à l'intérieur de cette zone valable des opérandes, les signaux auxiliaires ($G_i$ et $P_i$ ou $G^*_i$ et $P^*_i$) délivrés respectivement par les composants combinatoires (ALU0 à ALU3), au dispositif de prédiction de reports (PLA),

caractérisé par le fait qu'à tous les commutateurs de sélection (MUXA0 à MUA3) sont envoyés, en dehors des signaux auxiliaires ($P_i$ et $G_i$ et $P^*_i$ et $G^*_i$) délivrés par les composants combinatoires associés (ALU0 à ALU3) en tant que premier groupe de signaux d'entrée, un second groupe de signaux d'entrée qui est constitué par une combinaison, prédéterminée de façon uniforme, de signaux de remplacement prédéterminés de façon fixe de sorte que le signal de remplacement correspondant au signal auxiliaire P possède la valeur logique 1 et le signal de remplacement correspondant au signal auxiliaire G possède la valeur logique 0 et que, dans les commutateurs de sélection, qui ne sont pas associés à la zone valable des opérandes, prédéterminée par les opérandes (OP1,OP2) adaptés du point de vue position et longueur, sur l'étendue de la largeur de traitement de l'unité combinatoire arithmétique/logique (ALU), les signaux de remplacement correspondant à la combinaison uniforme sont respectivement transmis à la place des signaux auxiliaires ($P_i$ et $G_i$ ou $P^*_i$ et $G^*_i$), délivrés par les composants combinatoires (ALU0 à ALU3), de telle sorte qu'un report d'entrée (C0), appliqué au niveau du bord de poids le plus faible du dispositif de prédiction de reports (CLA), agit directement au niveau du bord de poids le plus faible de la zone valable des opérandes, et qu'un report de sortie (par exemple C2) déterminé au niveau du bord de poids le plus élevé de la zone valable des opérandes, est appliqué par le dispositif de prédiction de reports (CLA) directement au bord de poids le plus élevé du dispositif de prédiction de reports (CLA) et est délivré en tant que report externe de sortie (C4) à l'unité combinatoire (ALU).

2. Montage suivant la revendication 1, caractérisé par le fait qu'au niveau des sorties du résultat des composants combinatoires arithmétiques/logiques (ALU0 à ALU3), il est prévu respectivement un commutateur de sélection (MUXB0 à MUXB3) comportant deux entrées d'informations, dont l'une est raccordée à la sortie du résultat des composants combinatoires correspondants (ALU...) tandis que l'autre entrée d'informations est raccordée à la sortie correspondante d'un registre d'entrée (par exemple REGA) délivrant l'un des opérandes (par exemple OP1) et que respectivement l'une des entrées d'informations des commutateurs de sélection (MUXB0 à MUXB3) est raccordée directement à la sortie respective en fonction de l'information de sélection (DIGEN).

# FIG 1

# FIG 2

INF 1    $X_7 X_6 \boxed{F\ F\ 4\ 5} X_1 X_0$        $Y_7 Y_6 Y_5 Y_4 \boxed{E\ 3} Y_1 Y_0$   INF 2

OP A    $X_7 X_6 \boxed{F\ F\ 4\ 5} X_1 X_0$        $Y_7 Y_6 \boxed{0\ 0\ E\ 3} Y_1 Y_0$   OP B

ERGOP

INF 3    $C_8 = 1 \leftarrow Z_7 Z_6 \boxed{0\ 0\ 2\ 8} Z_1 Z_0 \leftarrow C_0 = 1$

INF 4    $X_7 X_6 \boxed{0\ 0\ 2\ 8} X_1 X_0$

$P_i^* : P_7^* P_6^* 1100\ P_1^* P_0^* \longrightarrow 11110011$

$G_i^* : G_7^* G_6^* 0010\ G_1^* G_0^* \longrightarrow 00001000$

$C_i$                 $\boxed{1}\ 1111011$

$C_8$

$00111100 \leftarrow$ DIGEN

ST-INF